# EUROPÄISCHE PATENTSCHRIFT

(11) **EP 2 432 141 B1**
(45) Veröffentlichungstag und Bekanntmachung des Hinweises auf die Patenterteilung: **15.01.2014**
(21) Anmeldenummer: 10178003.9
(22) Anmeldetag: 21.09.2010
(51) Int. Cl.: H04B 10/079

(54) **Verfahren zum Überwachen des Betriebs eines Kommunikationsnetzes**
Method for monitoring the operation of a communication network
Procédé de surveillance du fonctionnement d'un réseau de communication

(43) Veröffentlichungstag der Anmeldung: 21.03.2012
(73) Patentinhaber: Siemens Aktiengesellschaft, 80333 München (DE)
(72) Erfinder: Feix, Rudolf, 76131, Karlsruhe (DE); Gottwald, Sven, 90475, Nürnberg (DE); Kasper, Michael, 90411, Nürnberg (DE); Lohmeyer, Joachim, 91161, Hilpoltstein (DE)

(56) Entgegenhaltungen:
- US-A1- 2003 063 343
- US-A1- 2005 111 843
- US-A1- 2009 010 643

## Beschreibung

Die Erfindung betrifft ein Verfahren zum Überwachen des Betriebs eines Kommunikationsnetzes mit einer Vielzahl von miteinander vernetzten Netzkomponenten sowie ein entsprechendes Kommunikationsnetz.

Im Rahmen des Betriebs von Kommunikationsnetzen sind verschiedene Verfahren bekannt, mit denen die Ursache von Störungen diagnostiziert werden kann. Beispielsweise werden bei einer Kommunikation zwischen Netzkomponenten über optische Leitungen bei Inbetriebnahme des Kommunikationsnetzes diese optischen Leitungen vermessen und die Messwerte in einem Abnahmeprotokoll erfasst. Im Falle einer Störung im Kommunikationsnetz kann die entsprechende Messung wiederholt werden und mit dem Abnahmeprotokoll verglichen werden, um Abweichungen und damit zwischenzeitliche Veränderungen festzustellen. Außerdem ist es bekannt, den aktuellen Arbeitspunkt von in einem Kommunikationsnetz verwendeten optischen Transceivern mit entsprechend festgelegten Grenzwerten zu vergleichen und einen Fehler anzuzeigen, falls die Grenzwerte erreicht oder überschritten werden.

Diagnoseverfahren nach dem Stand der Technik sind aus US-A-20050111843 bekannt.

Bekannte Diagnoseverfahren weisen den Nachteil auf, dass sie nicht frühzeitig Unregelmäßigkeiten in der Kommunikation zwischen Netzkomponenten in dem Kommunikationsnetz erkennen können, sondern erst bei einem Ausfall oder einer bereits eingetretenen Störung zum Einsatz kommen. Oftmals liegen jedoch schon bei Inbetriebnahme des Kommunikationsnetzes Beschädigungen vor, die erst nach einiger Zeit zu Ausfällen führen. Beispielsweise können optische Lichtwellenleiter bei der Montage in einem Kommunikationsnetz vorgeschädigt werden, indem bei der Anbringung dieser Wellenleiter zulässige minimale Biegeradien der Leiter unterschritten werden bzw. maximal zulässige Zugbelastungen beim Einziehen der Leiter überschritten werden. Die optische Übertragung über solche vorgeschädigten Wellenleiter ist dabei zunächst funktionsfähig, jedoch kann es nach einiger Zeit, insbesondere durch Umwelteinflüsse, wie Temperaturzyklen, Bewegungen und dergleichen, zu Ausfällen auf der optischen Strecke kommen.

Aufgabe der Erfindung ist es deshalb, den Betrieb eines Kommunikationsnetzes derart zu überwachen, dass frühzeitig Unregelmäßigkeiten vor dem Auftreten von Störungen bzw. Ausfällen erkannt werden können.

Diese Aufgabe wird durch das Verfahren gemäß Patentanspruch 1 bzw. das Kommunikationsnetz gemäß Patentanspruch 16 gelöst. Weiterbildungen der Erfindung sind in den abhängigen Ansprüchen definiert.

Das erfindungsgemäße Verfahren dient zum Überwachen des Betriebs eines Kommunikationsnetzes mit einer Vielzahl von miteinander vernetzten Netzkomponenten. In einem Schritt a) werden für ein oder mehrere Paare aus einer ersten und einer zweiten Netzkomponente jeweils Betriebsparameter betreffend die Kommunikation zwischen der ersten und zweiten Netzkomponente bereitgestellt, wobei die Betriebsparameter einen oder mehrere lokale Betriebsparameter der ersten Netzkomponente und einen oder mehrere lokale Betriebsparameter der zweiten Netzkomponente umfassen und der oder die ersten Betriebsparameter zumindest teilweise aktuell im Betrieb des Kommunikationsnetzes von der ersten Netzkomponente erfasst werden und/oder der oder die zweiten Betriebsparameter zumindest teilweise aktuell im Betrieb des Kommunikationsnetzes von der zweiten Netzkomponente erfasst werden. Die lokalen ersten bzw. zweiten Betriebsparameter sind dabei Betriebsparameter, welche lokal in der entsprechenden ersten bzw. zweiten Netzkomponenten hinterlegt sind bzw. lokal in dieser Netzkomponente ermittelt werden.

In einem Schritt b) des erfindungsgemäßen Verfahrens wird schließlich basierend auf dem oder den ersten Betriebsparametern und dem oder den zweiten Betriebsparametern die Kommunikation zwischen der ersten und zweiten Netzkomponente überprüft. Die Art der Überprüfung kann dabei in unterschiedlicher Weise ausgestaltet sein, insbesondere werden die Betriebsparameter bzw. daraus abgeleitete Größen in geeigneter Weise miteinander und/oder mit Referenzwerten verglichen, um sich anbahnende Störungen zu erkennen bzw. zu diagnostizieren. Falls ein solcher Vergleich ergibt, dass eine Abweichung vorliegt, welche ein vorbestimmtes Maß überschreitet, wird z.B. eine Meldung ausgegeben. Erfindungswesentlich ist dabei, dass sowohl erste Betriebsparameter der ersten Netzkomponente als auch zweite Betriebsparameter der zweiten Netzkomponente bei der Diagnose berücksichtigt werden. Auf diese Weise wird sichergestellt, dass nicht nur lokale Unregelmäßigkeiten in den entsprechenden Netzkomponenten bekannt werden, sondern auch Unregelmäßigkeiten, welche auf Störungen in der Kommunikationsstrecke, wie z.B. auf die oben beschriebenen Vorschädigungen von Lichtwellenleitern, hindeuten.

Insbesondere werden aus den ersten und zweiten Betriebsparametern Eigenschaften der Kommunikation in Kommunikationsrichtung von der ersten zur zweiten Netzkomponente und in Kommunikationsrichtung von der zweiten zur ersten Netzkomponente ermittelt. Sollten dabei signifikante Unterschiede in den Übertragungseigenschaften zwischen den beiden Kommunikationsrichtungen vorliegen, deutet dies auf Beschädigungen der Kommunikationsstrecke hin, da üblicherweise die Eigenschaften von Übertragungsstrecken in den beiden Kommunikationsrichtungen sehr ähnlich sind. Vorzugsweise werden die Schritte a) und b) des erfindungsgemäßen Verfahrens in regelmäßigen Abständen oder gekoppelt an vorbestimmte Ereignisse (z.B. einer festgestellten Verschlechterung eines lokalen Betriebsparameters) durchgeführt, um so rechtzeitig auf problematische Übertragungsstrecken hingewiesen zu werden.

Ein bevorzugter Anwendungsfall der Erfindung ist die Überwachung des Betriebs eines Kommunikationsnetzes einer Automatisierungsanlage, wobei die Netzkomponenten in diesem Fall Komponenten der Automatisierungsanlage sind, wie z.B. Ethernet-Switches und/oder Router und/oder Sensoren und/oder Aktoren und/oder Steuergeräte und dergleichen.

Die Kommunikation zwischen der ersten und der zweiten Netzkomponente eines jeweiligen Paars kann auf verschiedene Arten erfolgen. In einer Variante kommunizieren die erste und zweite Netzkomponente über einen optischen Wellenleiter, wobei der optische Wellenleiter die erste und zweite Netzkomponente vorzugsweise direkt miteinander verbindet. In einer besonders bevorzugten Ausführungsform dieser Variante dienen eine oder mehrere erste Fasern des optischen Wellenleiters zur Kommunikation von der ersten Netzkomponente zur zweiten Netzkomponente und der oder die zweiten Betriebsparameter betreffen die Kommunikation über die erste oder ersten Fasern. Analog dienen ferner eine oder mehrere zweite Fasern des optischen Wellenleiters zur Kommunikation von der zweiten Netzkomponente zur ersten Netzkomponente, wobei der oder die ersten Betriebsparameter die Kommunikation über die zweite oder zweiten Fasern betreffen. Man macht sich bei dieser Ausführungsform die Erkenntnis zunutze, dass bei einem Defekt eines optischen Wellenleiters in der Regel nur die Fasern für eine Kommunikationsrichtung betroffen sind, so dass durch einen entsprechenden Vergleich der Betriebsparameter aus beiden Kommunikationsrichtungen ein Defekt festgestellt werden kann. In einer besonders bevorzugten Ausgestaltung stellen dabei der oder die ersten Betriebsparameter die jeweiligen gleichen lokalen Größen wie der oder die zweiten Betriebsparameter dar, wobei in Schritt b) überprüft wird, ob der oder die ersten Betriebsparameter mit dem oder den zweiten Betriebsparametern übereinstimmen. Falls die Überprüfung in Schritt b) ergibt, dass der oder die ersten Betriebsparameter von dem oder den zweiten Betriebsparametern abweichen, kann beispielsweise eine entsprechende Meldung ausgegeben werden. Alternativ oder zusätzlich kann eine Kommunikation zwischen einer ersten und einer zweiten Netzkomponente eines Paars über eine elektrische Leitung oder auch über eine drahtlose Verbindung erfolgen, wobei die elektrische Leitung oder die drahtlose Verbindung die erste und zweite Netzkomponenten vorzugsweise auch wieder direkt verbindet. Gegebenenfalls können in dem Kommunikationsnetz für unterschiedliche Paare aus erster und zweiter Netzkomponente auch unterschiedliche Verbindungsarten realisiert sein, d.h. das Kommunikationsnetz kann gegebenenfalls verschiedene leitungsgebundene bzw. drahtlose Verbindungen zwischen Nachbarkomponenten enthalten.

Im Rahmen der Überwachung des Betriebs des Kommunikationsnetzes ist es erfindungswesentlich, dass zumindest ein Teil der lokalen Betriebsparameter aktuell im Betrieb des Kommunikationsnetzes von einer entsprechenden Netzkomponente erfasst werden. Gegebenenfalls können auch alle im erfindungsgemäßen Verfahren berücksichtigten Betriebsparameter aktuell erfasst werden. Es besteht jedoch auch die Möglichkeit, dass die ersten Betriebsparameter teilweise für den ersten Netzknoten vorgegebene Betriebsparameter sind und/oder die zweiten Betriebsparameter teilweise für den zweiten Netzknoten vorgegebene Betriebsparameter sind. Diese vorgegebenen Betriebsparameter entsprechen bekannten Sollwerten, welche Eigenschaften einer entsprechenden Netzkomponente, wie z.B. eines darin enthaltenen optischen Transceivers, spezifizieren.

In einer besonders bevorzugten Ausführungsform des erfindungsgemäßen Verfahrens wird aus zumindest einem aktuell im Betrieb des Kommunikationsnetzes erfassten ersten Betriebsparameter und zumindest einem zweiten Betriebsparameter, der aktuell erfasst oder vorgegeben sein kann, eine erste Diagnosegröße für eine Kommunikationsrichtung zwischen der ersten und zweiten Netzkomponente ermittelt. Die Kommunikationsrichtung spezifiziert dabei eine Übertragung von dem ersten Netzknoten zum zweiten Netzknoten oder in umgekehrter Richtung. Ferner wird aus zumindest einem aktuell im Betrieb des Kommunikationsnetzes erfassten zweiten Betriebsparameter und zumindest einem ersten Betriebsparameter, der aktuell erfasst oder vorgegeben sein kann, eine zweite Diagnosegröße für die andere Kommunikationsrichtung zwischen der ersten und zweiten Netzkomponente ermittelt. Dabei werden in Schritt b) des erfindungsgemäßen Verfahrens die erste und zweite Diagnosegröße miteinander verglichen und eine Meldung ausgegeben, falls der Unterschied zwischen der ersten und zweiten Diagnosegröße ein vorbestimmtes Maß überschreitet. Gemäß dieser Variante der Erfindung kann somit auf mögliche Störungen durch Vergleich der beiden Kommunikationsrichtungen zwischen zwei Netzkomponenten geschlossen werden. Die Diagnosegrößen können je nach verwendeten Betriebsparametern unterschiedlich sein. Wie weiter unten erläutert wird, können die Diagnosegrößen z.B. Dämpfungsmaße für die entsprechenden Kommunikationsrichtungen darstellen.

In einer besonders bevorzugten Ausführungsform werden als erste Betriebsparameter eine Empfangsstärke eines von der zweiten Netzkomponente ausgesendeten Signals in der ersten Netzkomponente und/oder eine Sendestärke eines von der ersten Netzkomponente ausgesendeten Signals und/oder ein Zählwert von nicht korrekt in der ersten Netzkomponente empfangenen Daten verwendet. Analog können die zweiten Betriebsparameter eine Empfangsstärke eines von der ersten Netzkomponente ausgesendeten Signals in der zweiten Netzkomponente und/oder eine Sendestärke eines von der zweiten Netzkomponente ausgesendeten Signals und/oder einen Zählwert von nicht korrekt in der zweiten Netzkomponente empfangenen Daten umfassen. Im Falle einer optischen Übertragungsstrecke sind die Sendestärken bzw. Empfangsstärken entsprechende Sendeleistungen bzw. Empfangsleistungen der übertragenen optischen Signale.

In einer weiteren, bevorzugten Ausführungsform des erfindungsgemäßen Verfahrens erfasst die erste Netzkomponente als einen ersten Betriebsparameter die Empfangsstärke eines von der zweiten Netzkomponente ausgesendeten Signals bei sich. Ferner wird als weiterer erster Betriebsparameter die Sendestärke eines von der ersten Netzkomponente ausgesendeten Signals bereitgestellt, wobei diese Größe gegebenenfalls auch von der ersten Netzkomponente erfasst sein kann. Parallel erfasst die zweite Netzkomponente als einen zweiten Betriebsparameter die Empfangsstärke eines von der ersten Netzkomponente ausgesendeten Signals bei sich. Ferner wird als weiterer zweiter Betriebsparameter die Sendestärke eines von der zweiten Netzkomponente ausgesendeten Signals bereitgestellt, wobei diese Sendestärke gegebenenfalls auch durch die zweite Netzkomponente erfasst sein kann. Aus der Empfangsstärke des von der ersten Netzkomponente ausgesendeten Signals und der Sendestärke des von der ersten Netzkomponente ausgesendeten Signals wird schließlich ein erstes Dämpfungsmaß für das von der ersten zur zweiten Netzkomponente übertragene Signal ermittelt. Analog wird aus der Empfangsstärke des von der zweiten Netzkomponente ausgesendeten Signals und der Sendestärke des von der zweiten Netzkomponente ausgesendeten Signals ein zweites Dämpfungsmaß für das von der zweiten zur ersten Netzkomponente übertragende Signal ermittelt. Zur Überprüfung der Kommunikation zwischen der ersten und zweiten Netzkomponente werden schließlich das erste und zweite Dämpfungsmaß miteinander verglichen und eine Meldung ausgegeben, falls der Unterschied zwischen dem ersten und dem zweiten Dämpfungsmaß eine vorbestimmte Schwelle überschreitet.

Der obige Begriff des Dämpfungsmaßes ist hier und im Folgenden weit zu verstehen und stellt eine Größe dar, welche die Abnahme der Signalstärke von der sendenden zur empfangenen Netzkomponente repräsentiert. In einer bevorzugten Variante kann das Dämpfungsmaß dabei als der Quotient aus Sendestärke und Empfangsstärke bzw. einer daraus abgeleiteten (z.B. logarithmischen) Größe angegeben werden. Nichtsdestotrotz kann das Dämpfungsmaß z.B. auch als eine aus der Dämpfung abgeleitete Leitungslänge zwischen der ersten und zweiten Netzkomponente repräsentiert werden, wobei in diesem Fall die Eigenschaften des Leiters bekannt sind. Dabei steht eine größere Länge des Wellenleiters für eine höhere Dämpfung und damit ein größeres Dämpfungsmaß.

Die soeben erläuterte Variante des erfindungsgemäßen Verfahrens ermöglicht eine Überprüfung des Kommunikationsnetzes basierend auf dem Vergleich der Übertragungseigenschaften in beiden Kommunikationsrichtungen einer Übertragungsstrecke zwischen zwei Netzkomponenten. Gegebenenfalls besteht jedoch auch die Möglichkeit, dass nur eine Kommunikationsrichtung bei der Überprüfung der Kommunikation zwischen zwei Netzkomponenten herangezogen wird.

In einer Variante der Erfindung, welche nur eine Kommunikationsrichtung berücksichtigt, erfasst die erste Netzkomponente als einen ersten Betriebsparameter die Empfangsstärke eines von der zweiten Netzkomponente ausgesendeten Signals bei sich. Ferner wird als ein zweiter Betriebsparameter die Sendeleistung eines von der zweiten Netzkomponente ausgesendeten Signals bereitgestellt, wobei diese Sendestärke von der zweiten Netzkomponente erfasst sein kann oder vorgegeben sein kann. Aus diesen Betriebsparametern wird ein Dämpfungsmaß für das von der zweiten zur ersten Netzkomponente übertragenen Signal ermittelt und eine Meldung ausgegeben, falls der Unterschied zwischen dem ermittelten Dämpfungsmaß und einem vorbestimmten Dämpfungsmaß einen Schwellwert überschreitet. Das vorbestimmte Dämpfungsmaß repräsentiert dabei eine vorbekannte Größe, welche die Verbindung zwischen der ersten und zweiten Netzkomponente charakterisiert, z.B. eine vorbekannte Leitungslänge bzw. eine maximale und gegebenenfalls auch minimale Leitungslänge zwischen den Netzkomponenten. Demzufolge kann davon ausgegangen werden, dass eine Vorschädigung in der entsprechenden Übertragungsstrecke bzw. Übertragungsleitung vorliegt, wenn eine größere Abweichung zwischen dem ermittelten und vorbestimmten Dämpfungsmaß auftritt.

Die oben beschriebene Ausführungsform kann analog auch auf die andere Kommunikationsrichtung zwischen zwei Netzknoten angewandt werden. In diesem Fall erfasst die zweite Netzkomponente als einen zweiten Betriebsparameter die Empfangsstärke eines von der ersten Netzkomponente ausgesendeten Signals bei sich. Ferner wird als ein erster Betriebsparameter die Sendestärke eines von der ersten Netzkomponente ausgesendeten Signals bereitgestellt, wobei die Sendestärke aktuell erfasst sein kann oder vorgegeben sein kann. Aus diesen Parametern wird wiederum ein Dämpfungsmaß für das von der ersten zur zweiten Netzkomponente übertragene Signal ermittelt und eine Meldung ausgegeben, falls der Unterschied zwischen dem ermittelten Dämpfungsmaß und einem vorbestimmten Dämpfungsmaß einen Schwellwert überschreitet.

In einer weiteren Ausgestaltung des erfindungsgemäßen Verfahrens werden zur Überprüfung der Kommunikation zwischen einem ersten und zweiten Netzknoten die oben erwähnten Fehlerzählwerte verwendet. Dabei werden als ein erster Betriebsparameter der Fehlerzählwert von nicht korrekt in der ersten Netzkomponente empfangenen Daten und als ein zweiter Betriebsparameter der Fehlerzähler von nicht korrekt in der zweiten Netzkomponente empfangenen Daten bereitgestellt, wobei die beiden Fehlerzählwerte miteinander verglichen werden und eine Meldung ausgegeben wird, falls der Unterschied zwischen den Fehlerzählwerten eine vorbestimmte Schwelle überschreitet.

Der Schritt b) des erfindungsgemäßen Verfahrens, gemäß dem die Kommunikation zwischen einer ersten und einer zweiten Netzkomponente eines entsprechenden Paars basierend auf ersten und zweiten Betriebsparametern überprüft wird, kann zumindest teilweise dezentral bzw. zumindest teilweise zentral durchgeführt werden. Ist Schritt b) zumindest teilweise dezentral realisiert, übermittelt die erste Netzkomponente ihre ersten Betriebsparameter an die zweite Netzkomponente und/oder die zweite Netzkomponente ihre zweiten Betriebsparameter an die erste Netzkomponente. In einer nur teilweisen dezentralen Realisierung können z.B. in der ersten bzw. zweiten Netzkomponente entsprechende Diagnosegrößen ermittelt werden, die dann an eine zentrale Einheit übertragen werden, welche einen Vergleich zwischen den Diagnosegrößen durchführt. In einer rein dezentralen Realisierung wird Schritt b) komplett in der ersten bzw. zweiten Netzkomponente durchgeführt, d.h. in einer speziellen Ausführungsform ermittelt die erste bzw. zweite Netzkomponente die Diagnosegrößen und vergleicht diese auch miteinander. Die Übermittlung der ersten Betriebsparameter an die zweite Netzkomponente und/oder die Übermittlung der zweiten Betriebsparameter an die erste Netzkomponente erfolgt vorzugsweise basierend auf dem aus dem Stand der Technik bekannten LLDP-Protokoll (LLDP = Link Layer Discovery Protocol).

Bei einer zumindest teilweisen zentralen Realisierung des erfindungsgemäßen Verfahrens wird Schritt b) zumindest teilweise in einer zentralen Überwachungseinheit durchgeführt, wobei hierfür in der zentralen Überwachungseinheit Informationen von der ersten und zweiten Netzkomponente empfangen werden. Diese Informationen umfassen dabei den oder die ersten und zweiten Betriebsparameter und/oder daraus abgeleitete Größen. Bei einer komplett zentralen Realisierung werden lediglich die ersten und zweiten Betriebsparameter an die Überwachungseinheit übertragen, welche anschließend dann Schritt b) durchführt, indem sie beispielsweise Diagnosegrößen ermittelt und diese miteinander vergleicht sowie gegebenenfalls eine Meldung ausgibt. Bei einer nur teilweisen zentralen Realisierung können z.B. in den Netzkomponenten entsprechende Diagnosegrößen aus den Betriebsparametern abgeleitet werden, welche dann an die zentrale Überwachungseinheit übermittelt werden, die diese Diagnosegröße vergleicht und gegebenenfalls eine Meldung ausgibt. Bei einer zumindest teilweisen zentralen Realisierung der Erfindung werden die von der Netzkomponente stammenden Informationen in der zentralen Überwachungseinheit vorzugsweise basierend auf dem SNMP-Protokoll empfangen (SNMP = Smart Network Management Protocol).

Neben dem oben beschriebenen Verfahren betrifft die Erfindung ferner ein Kommunikationsnetz mit einer Vielzahl von miteinander vernetzten Netzkomponenten, wobei das Kommunikationsnetz derart ausgestaltet ist, dass im Betrieb des Kommunikationsnetzes das erfindungsgemäße Verfahren bzw. eine oder mehrere Varianten des erfindungsgemäßen Verfahrens durchführbar sind.

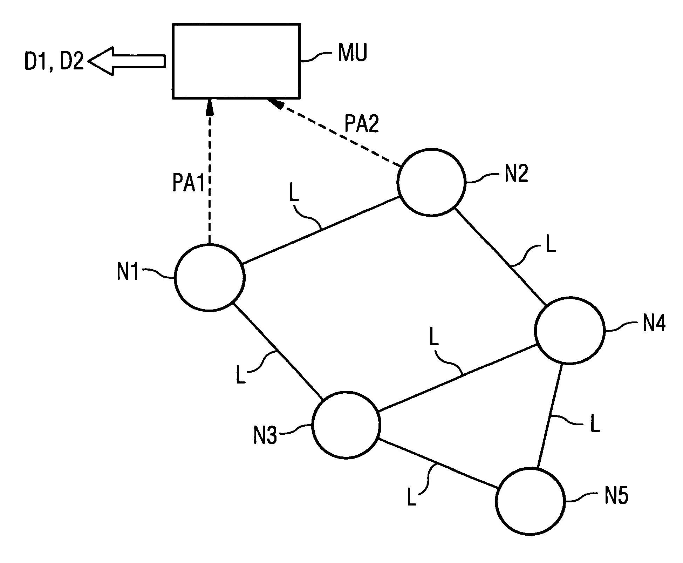

Ein Ausführungsbeispiel der Erfindung wird nachfolgend anhand der beigefügten Fig. 1 detailliert beschrieben. Diese Figur zeigt in schematischer Darstellung ein Kommunikationsnetz, welches gemäß einer Variante des erfindungsgemäßen Verfahrens überwacht wird.

Das Kommunikationsnetz der Fig. 1 umfasst eine Mehrzahl von miteinander vernetzten Netzkomponenten in der Form von Netzknoten N1, N2, N3, N4 und N5. Die einzelnen Netzkomponenten sind über optische Wellenleiter miteinander vernetzt, welche mit dem Bezugszeichen L bezeichnet sind. Bei den einzelnen Netzkomponenten kann es sich beispielsweise um entsprechende Geräte eines Kommunikationsnetzes eines Automatisierungssystems handeln, wie z.B. Ethernet-Switches, Sensoren, Aktoren, Eingabe- und/oder Ausgabegeräte, Steuergeräte und dergleichen. Anstatt einer Vernetzung über optische Wellenleiter kann für einen Teil bzw. auf das gesamte Netz eine andere Art der Vernetzung der Komponenten, beispielsweise basierend auf elektrischen Verbindungen bzw. gegebenenfalls auch drahtlos (z.B. über WLAN) vorgesehen sein.

Die einzelnen Netzkomponenten des Netzes der Fig. 1 enthalten jeweils einen optischen Transceiver zum Empfangen bzw. Aussenden entsprechender optischer Signale über die mit der jeweiligen Netzkomponente verbundenen Wellenleiter. In dem Kommunikationsnetz wird dabei die Signalübertragung über die Transceiver und Wellenleiter überwacht, wobei zur Überwachung immer geeignete Betriebsparameter von Paaren von Netzknoten analysiert werden. Die Überwachung erfolgt in der Ausführungsform der Fig. 1 über eine zentrale Überwachungseinheit MU, welche Betriebsparameter für Paare von Netzknoten von diesen Netzknoten empfängt und zur Überprüfung der Kommunikation zwischen den Netzknoten geeignet auswertet. Die zentrale Überwachungseinheit hat somit auf jeden der Netzknoten des Kommunikationsnetzes Zugriff.

In Fig. 1 ist beispielhaft die Überwachung der Kommunikation zwischen der Netzkomponente N1 und N2 angedeutet, um Unregelmäßigkeiten im Rahmen der Kommunikation bzw. Vorschädigungen des Wellenleiters oder andere sich anbahnende Defekte in den Transceivern der jeweiligen Netzkomponenten zu erkennen. Zur Durchführung einer entsprechenden Diagnose übermittelt die Netzkomponente N1 erste Betriebsparameter PA1 an die zentrale Überwachungseinheit MU. Ebenso übermittelt die Netzkomponente N2 zweite Betriebsparameter PA2 an die zentrale Überwachungseinheit MU. Die Übermittlung dieser Betriebsparameter erfolgt in regelmäßigen Abständen bzw. in Abhängigkeit von vorbestimmten Ereignissen. In der hier beschriebenen Ausführungsform sind die Betriebsparameter PA1 und PA2 aktuell zu einem vorbestimmten Zeitpunkt im Knoten N1 bzw. Knoten N2 ermittelte Betriebsparameter der Transceiver. Gegebenenfalls besteht auch die Möglichkeit, dass ein Teil der Betriebsparameter vorbestimmte Betriebsparameter der entsprechenden Transceiver in den Netzkomponenten sind, wobei diese vorbestimmten Betriebsparameter Sollbetriebswerte gemäß der technischen Spezifikation der Transceiver in den jeweiligen Netzknoten darstellen. Die vorbestimmten bzw. aktuell ermittelten Betriebsparameter der Transceiver können dabei in geeigneter Weise über eine Diagnoseschnittstelle, z.B. über die in der Spezifikation SFF-8427 beschriebene Diagnoseschnittstelle, ausgelesen werden. Auch wenn die Betriebsparameter PA1 und PA2 vorbestimmte Betriebsparameter beinhalten, so muss zumindest einer der Betriebsparameter zur Realisierung der Erfindung ein aktuell ermittelter Betriebsparameter eines entsprechenden Transceivers der Netzkomponente N1 oder N2 sein.

In der hier beschriebenen Ausführungsform der Erfindung ermittelt die Netzkomponente N1 die Sendeleistung des von ihr hin zur Netzkomponente N2 ausgesendeten optischen Signals. Ferner bestimmt die Netzkomponente N1 die Empfangsleistung des von der Netzkomponente N2 ausgesendeten und bei sich empfangenen optischen Signals. Diese ersten Betriebsparameter PA1 werden an die Überwachungseinheit MU übermittelt. Analog bestimmt die Netzkomponente N2 die Sendeleistung des von ihr hin zur Netzkomponente N1 ausgesendeten optischen Signals sowie die Empfangsleistung der von der Netzkomponente N1 ausgesendeten und bei sich empfangenen Signals. Diese zweiten Betriebsparameter PA2 werden ebenfalls an die zentrale Überwachungseinheit MU übermittelt.

Die zentrale Überwachungseinheit wertet diese Betriebsparameter aus. Sie ermittelt dabei einen ersten Dämpfungswert D1 für das von der Netzkomponente N1 zur Netzkomponente N2 übertragenen Signals, indem sie die Sendeleistung des von der Netzkomponente N1 ausgesendeten Signals durch die Empfangsleistung des von der Netzkomponente N1 ausgesendeten Signals in der Komponente N2 teilt. Ebenso wird von der Überwachungseinheit MU als zweiter Dämpfungswert D2 für das von der Netzkomponente N2 an die Netzkomponente N1 übertragene Signal der Quotient aus der Sendeleistung des von der Netzkomponente N2 augesendeten Signals und der Empfangsleistung des von der Netzkomponente N2 ausgesendeten Signals in der Komponente N1 bestimmt. Im Normalbetrieb kann davon ausgegangen werden, dass die Dämpfung bei der Übertragung von N1 nach N2 in vorbestimmten Toleranzgrenzen genauso groß ist wie die Dämpfung von N2 nach N1. Ist dies nicht der Fall, deutet dies auf Unregelmäßigkeiten hin, beispielsweise kann durch eine Quetschung des Lichtwellenleiters die Dämpfung in einer Kommunikationsrichtung höher sein. Ebenso können nicht korrekte Anschlüsse des Lichtwellenleiters an die entsprechenden Transceiver zu unterschiedlichen Dämpfungen in den verschiedenen Kommunikationsrichtungen führen.

Um solche Unregelmäßigkeiten zu erkennen, wird in der zentralen Überwachungseinheit MU der erste Dämpfungswert mit dem zweiten Dämpfungswert verglichen. Sofern die betragsmäßige Differenz dieser Dämpfungswerte einen vorbestimmten Toleranzwert überschreitet, wird eine entsprechende Meldung ausgegeben. Diese Meldung kann z.B. über eine Benutzerschnittstelle in der Form eines in der Überwachungseinheit vorgesehenen Bildschirms angezeigt werden, wodurch ein menschlicher Operator, der die zentrale Überwachungseinheit bedient, darüber informiert wird, an welcher Stelle im Kommunikationsnetz nähere Überprüfungen durchgeführt werden sollten, um Vorschädigungen bzw. Veränderungen der optischen Strecke zwischen entsprechenden Netzkomponenten zu erkennen und geeignete Maßnahmen zu ergreifen, mit denen ein sich anbahnenden Ausfall von Kommunikationsstrecken verhindert werden kann.

Neben der Ermittlung entsprechender Dämpfungswerte für beide Kommunikationsrichtungen zwischen den Netzkomponenten N1 und N2 können in dem Kommunikationsnetz der Fig. 1 gegebenenfalls auch andere Betriebsparameter bzw. daraus abgeleitete Größen ermittelt werden, um Unregelmäßigkeiten in der Kommunikation zwischen der Netzkomponente N1 und N2 festzustellen. Sollte beispielsweise die Leitungslänge zwischen den Netzkomponenten N1 und N2 bekannt sein bzw. eine maximale Leitungslänge vorgegeben sein, so kann als erster Betriebsparameter die Empfangsleistung eines von der Netzkomponente N2 ausgesendeten Signals in der Netzkomponente N1 und als zweiter Betriebsparameter die Sendeleistung des Signals in der Netzkomponente N2 betrachtet werden. Die Sendeleistung kann dabei analog zur Empfangsleistung aktuell im Betrieb des Kommunikationsnetzes ermittelt werden oder gemäß der Spezifikation des Transceivers in der Netzkomponente N2 vorgegeben sein. Aus der Empfangsleistung und der Sendeleistung kann wiederum ein Dämpfungswert ermittelt werden, aus dem unter Verwendung der Spezifikation des zwischen den Netzkomponenten verlegten Lichtwellenleiters die Länge dieses Leiters abgeschätzt werden kann. Sollte diese Länge über ein vorgegebenes Maß hinaus von der vorbekannten Länge abweichen bzw. die maximale Länge überschreiten, so kann wiederum eine entsprechende Meldung über die zentrale Überwachungseinheit MU ausgegeben werden.

In einer weiteren Variante können als Betriebsparameter entsprechende Zählwerte von Fehlerzählern in den Komponenten N1 und N2 verwendet werden, wobei diese Zählwerte die Anzahl von bei der Datenübertragung zwischen der Netzkomponente N1 und N2 verloren gegangenen Datenpaketen bzw. zerstörten Datenpaketen repräsentieren. Die aktuellen Zählwerte der Fehlerzähler der Komponenten N1 und N2 können wiederum an die zentrale Überwachungseinheit MU übermittelt werden, welche die beiden Zählwerte miteinander vergleicht. Da im Normalbetrieb die Fehlerrate in beiden Kommunikationsrichtungen von N1 nach N2 und von N2 nach N1 im Wesentlichen gleich groß sein sollte, wird durch die zentrale Überwachungseinheit MU wiederum eine Meldung ausgegeben, wenn sich die beiden Zählwerte um ein vorbestimmtes Maß unterscheiden.

Die anhand von Fig. 1 beschriebene Ausführungsform der Erfindung beruht auf einer zentralen Überwachung des Betriebs des Kommunikationsnetzes mittels einer Überwachungseinheit MU, welche von entsprechenden Netzkomponenten Betriebsparameter empfängt und anschließend auswertet. Erfindungsgemäß ist es jedoch auch möglich, dass bestimmte Funktionalitäten der Überwachungseinheit MU dezentral von jeweiligen Knoten durchgeführt werden bzw. die Überwachung komplett dezentral abläuft. Beispielsweise besteht die Möglichkeit, dass die entsprechenden Dämpfungswerte D1 und D2 nicht in der Einheit MU ermittelt werden, sondern in den jeweiligen Netzknoten N1 und N2. Insbesondere kann der Netzknoten N1 den ersten Dämpfungswert für die Kommunikationsstrecke vom Netzknoten N2 zu N1 ermitteln, wohingegen der zweite Netzknoten N2 den Dämpfungswert für die Kommunikationsstrecke vom Netzknoten N1 zum Netzknoten N2 ermittelt. Hierzu ist es notwendig, dass die beiden Netzkomponenten N1 und N2 entsprechende Betriebsparameter untereinander austauschen. Dieser Informationsaustausch kann in geeigneter Weise mit an sich bekannten Protokollen, wie z.B. dem LLDP-Protokoll, durchgeführt werden. Die in den Netzkomponenten ermittelten Dämpfungswerte D1 und D2 werden anschließend von jeder der Komponenten an die zentrale Überwachungseinheit MU übermittelt, welche hieraus wiederum durch Vergleich dieser Werte Unregelmäßigkeiten diagnostizieren kann.

Gegebenenfalls kann auch auf die zentrale Überwachungseinheit MU ganz verzichtet werden. In diesem Fall kann z.B. die Netzkomponente N1 alle Betriebsparameter der Netzkomponente N2 empfangen und dann die entsprechenden Dämpfungswerte unter Verwendung seiner eigenen Betriebsparameter ermitteln und Unregelmäßigkeiten diagnostizieren. Diese können dann z.B. über eine entsprechende Diagnose-LED am Gehäuse der Netzkomponente N1 ausgegeben werden. In Analogie kann auch die Netzkomponente N2 alle Betriebsparameter der Netzkomponente N1 empfangen und entsprechende Dämpfungswerte und Unregelmäßigkeiten ermitteln und über eine entsprechende Diagnose-LED anzeigen. Gegebenenfalls besteht auch die Möglichkeit, dass die Netzkomponenten bei Auftreten von Unregelmäßigkeiten eine Meldung an eine zentrale Einheit übermitteln, wobei diese zentrale Einheit nunmehr nicht mehr die Auswertung der Betriebsparameter selbst vornehmen muss.

Das im Vorangegangenen beschriebene erfindungsgemäße Verfahren weist eine Reihe von Vorteilen auf. Insbesondere können durch den wiederholten Abgleich von Betriebsparametern zwischen Paaren von Netzkomponenten im Betrieb des Kommunikationsnetzes Vorschädigungen sowie Veränderungen von Übertragungsstrecken zwischen den Netzkomponenten frühzeitig erkannt und signalisiert werden. Somit kann z.B. ein Austausch von Lichtwellenleitern beim Erkennen von Unregelmäßigkeiten in dem Wartungszeitraum des Kommunikationsnetzes eingeplant werden. Auf diese Weise wird die Wahrscheinlichkeit von Ausfällen des Kommunikationsnetzes vermindert, was wiederum zu einer Reduzierung von Ausfallzeiten und zu Kosteneinsparungen im Betrieb des Netzes führt.

## Patentansprüche

1. Verfahren zum Überwachen des Betriebs eines Kommunikationsnetzes mit einer Vielzahl von miteinander vernetzten Netzkomponenten (N1, N2, ..., N5), bei dem:
a) für ein oder mehrere Paare aus einer ersten und einer zweiten Netzkomponente (N1, N2) jeweils Betriebsparameter (PA1, PA2) betreffend die Kommunikation zwischen der ersten und zweiten Netzkomponente bereitgestellt werden, wobei die Betriebsparameter (PA1, PA2) einen oder mehrere lokale erste Betriebsparameter (PA1) der ersten Netzkomponente (N1) und einen oder mehrere lokale zweite Betriebsparameter (PA2) der zweiten Netzkomponente (N2) umfassen, wobei der oder die ersten Betriebsparameter (PA1) zumindest teilweise aktuell im Betrieb des Kommunikationsnetzes von der ersten Netzkomponente (PA1) erfasst werden und/oder der oder die zweiten Betriebsparameter (PA2) zumindest teilweise aktuell im Betrieb des Kommunikationsnetzes von der zweiten Netzkomponente (N2) erfasst werden;
b) basierend auf dem oder den ersten Betriebsparametern (PA1) und dem oder den zweiten Betriebsparametern (PA2) die Kommunikation zwischen der ersten und zweiten Netzkomponente (N1, N2) überprüft wird,
**dadurch gekennzeichnet, dass** die erste und zweite Netzkomponente (N1, N2) eines jeweiligen Paars über einen optischen Wellenleiter miteinander kommunizieren, wobei der optische Wellenleiter die erste und zweite Netzkomponente (N1, N2) vorzugsweise direkt miteinander verbindet, und dass eine oder mehrere erste Fasern des optischen Wellenleiters zur Kommunikation von der ersten zur zweiten Netzkomponente (N1, N2) dienen und der oder die zweiten Betriebsparameter (PA2) die Kommunikation über die erste oder ersten Fasern betreffen und wobei eine oder mehrere zweite Fasern des optischen Wellenleiters zur Kommunikation von der zweiten zur ersten Netzkomponente (N1, N2) dienen und der oder die ersten Betriebsparameter (PA1) die Kommunikation über die zweite oder zweiten Fasern betreffen.

2. Verfahren nach Anspruch 1, bei dem der Betrieb eines Kommunikationsnetzes einer Automatisierungsanlage überwacht wird und die Netzkomponenten (N1, N2) Komponenten der Automatisierungsanlage, insbesondere einen oder mehrere Ethernet-Switches und/oder Router und/oder Sensoren und/oder Aktoren und/oder Steuergeräte, darstellen.

3. Verfahren nach einem der vorhergehenden Ansprüche, bei dem der oder die ersten Betriebsparameter (PA1) die jeweiligen gleichen lokalen Größen wie der oder die zweiten Betriebsparameter (PA2) darstellen, wobei in Schritt b) überprüft wird, ob der oder die ersten Betriebsparameter (PA1) mit dem oder den zweiten Betriebsparametern (PA2) übereinstimmen.

4. Verfahren nach einem der vorhergehenden Ansprüche, bei dem die erste und zweite Netzkomponente (N1, N2) eines jeweiligen Paars über eine elektrische Leitung oder über eine drahtlose Verbindung miteinander kommunizieren, wobei die elektrische Leitung oder die drahtlose Verbindung die erste und zweite Netzkomponente (N1, N2) vorzugsweise direkt miteinander verbindet.

5. Verfahren nach einem der vorhergehenden Ansprüche, bei dem die ersten Betriebsparameter (PA1) teilweise für den ersten Netzknoten (N1) vorgegebene Betriebsparameter sind und/oder die zweiten Betriebsparameter (PA2) teilweise für den zweiten Netzknoten (N2) vorgegebene Betriebsparameter sind.

6. Verfahren nach einem der vorhergehenden Ansprüche, bei dem aus zumindest einem aktuell im Betrieb des Kommunikationsnetzes erfassten ersten Betriebsparameter (PA1) und zumindest einem zweiten Betriebsparameter (PA2) eine erste Diagnosegröße für eine Kommunikationsrichtung zwischen der ersten und zweiten Netzkomponente (N1, N2) ermittelt wird und aus zumindest einem aktuell im Betrieb des Kommunikationsnetzes erfassten zweiten Betriebsparameter (PA2) und zumindest einem ersten Betriebsparameter (PA1) eine zweite Diagnosegröße für die andere Kommunikationsrichtung zwischen der ersten und zweiten Netzkomponente (N1, N2) ermittelt wird, wobei in Schritt b) die erste und zweite Diagnosegröße (D1, D2) miteinander verglichen werden und eine Meldung ausgegeben wird, falls der Unterschied zwischen der ersten und zweiten Diagnosegröße (D1, D2) ein vorbestimmtes Maß überschreitet.

7. Verfahren nach einem der vorhergehenden Ansprüche, bei dem der oder die ersten Betriebsparameter (PA1) eine Empfangsstärke eines von der zweiten Netzkomponente (N2) ausgesendeten Signals in der ersten Netzkomponente (N1) und/oder eine Sendestärke eines von der ersten Netzkomponente (N1) ausgesendeten Signals und/oder einen Fehlerzählwert von nicht korrekt in der ersten Netzkomponente (N1) empfangenen Daten umfassen; und/oder
der oder die zweiten Betriebsparameter (PA2) eine Empfangsstärke eines von der ersten Netzkomponente (N1) ausgesendeten Signals in der zweiten Netzkomponente (N2) und/oder eine Sendestärke eines von der zweiten Netzkomponente (N2) ausgesendeten signals und/oder einen Fehlerzählwert von nicht korrekt in der zweiten Netzkomponente (N2) empfangenen Daten umfassen.

8. Verfahren nach Anspruch 7, bei dem
- die erste Netzkomponente (N1) als einen ersten Betriebsparameter (PA1) die Empfangsstärke eines von der zweiten Netzkomponente (N2) ausgesendeten Signals bei sich erfasst und ferner als weiterer erster Betriebsparameter die Sendestärke eines von der ersten Netzkomponente (N1) ausgesendeten Signals bereitgestellt wird;
- die zweite Netzkomponente (N2) als einen zweiten Betriebsparameter (PA2) die Empfangsstärke eines von der ersten Netzkomponente (N1) ausgesendeten Signals bei sich erfasst und ferner als weiterer zweiter Betriebsparameter (PA2) die Sendestärke eines von der zweiten Netzkomponente (N2) ausgesendeten Signals bereitgestellt wird;
- aus der Empfangsstärke des von der ersten Netzkomponente (N1) ausgesendeten Signals und der Sendestärke des von der ersten Netzkomponente (N1) ausgesendeten Signals ein erstes Dämpfungsmaß (D1) für das von der ersten zur zweiten Netzkomponente (N1, N2) übertragene Signal ermittelt wird;
- aus der Empfangsstärke des von der zweiten Netzkomponente ausgesendeten Signals und der Sendestärke des von der zweiten Netzkcmponente (N2) ausgesendeten Signals ein zweites Dämpfungsmaß (D1) für das von der zweiten zur ersten Netzkomponente (N1, N2) übertragene Signal ermittelt wird;
- das erste und zweite Dämpfungsmaß (D1, D2) miteinander verglichen werden und eine Meldung ausgegeben wird, falls der Unterschied zwischen dem ersten und zweiten Dämpfungsmaß (D1, D2) eine vorbestimmte Schwelle überschreitet.

9. Verfahren nach Anspruch 7 oder 8, bei dem die erste Netzkomponente (N1) als einen ersten Betriebsparameter (PA1) die Empfangsstärke eines von der zweiten Netzkomponenten (N2) ausgesendeten Signals bei sich erfasst und ferner als ein zweiter Betriebsparameter (PA2) die Sendestärke eines von der zweiten Netzkomponente ausgesendeten Signals bereitgestellt wird, wobei aus diesen Betriebsparametern ein Dämpfungsmaß (D1, D2) für das von der zweiten zur ersten Netzkomponente (N1, N2) übertragene Signal ermittelt wird und eine Meldung ausgegeben wird, falls der Unterschied zwischen dem ermittelten Dämpfungsmaß (D1, D2) und einem vorbestimmten Dämpfungemaß einen Schwellwert überschreitet.

10. Verfahren nach einem der Ansprüche 7 bis 9, bei dem die zweite Netzkomponente (N2) als einen zweiten Betriebsparameter (PA2) die Empfangsstärke eines von der ersten Netzkomponenten (N1) ausgesendeten signals bei sich erfasst und ferner als ein erster Betriebsparameter (PA1) die Sendestärke eines von der ersten Netzkomponente (N1) ausgesendeten Signals bereitgestellt wird, wobei aus diesen Betriebsparametern ein Dämpfungsmaß (D1, D2) für das von der ersten zur zweiten Netzkomponente (N1, N2) übertragene Signal ermittelt wird und eine Meldung ausgegeben wird, falls der Unterschied zwischen dem ermittelten Dämpfungsmaß (D1, D2) und einem vorbestimmten Dämpfungsmaß einen Schwellwert überschreitet.

11. Verfahren nach einem der Ansprüche 7 bis 10, bei dem als ein erster Betriebsparameter (PA1) der Fehlerzählwert von nicht korrekt in der ersten Netzkomponente (N1) empfangenen Daten und als ein zweiter Betriebsparameter (PA2) der Fehlerzählwert von nicht korrekt in der zweiten Netzkomponente (N2) empfangenen Daten bereitgestellt werden, wobei die beiden Fehlerzählwert miteinander verglichen werden und eine Meldung ausgegeben wird, falls der Unterschied zwischen den Fehlerzählwerten eine vorbestimmte Schwelle überschreitet.

12. Verfahren nach einem der vorhergehenden Ansprüche, bei dem Schritt b) zumindest teilweise dezentral in der ersten und/oder zweiten Netzkomponente (N1, N2) eines jeweiligen Paars ausgeführt wird, wobei hiefür die erste Netzkomponente (N1) ihre ersten Betriebsparameter (PA1) an die zweite Netzkomponente (N2) und/oder die zweite Netzkomponente (N2) ihre zweiten Betriebsparameter (PA2) an die erste Netzkomponente (N1) übermittelt.

13. Verfahren nach Anspruch 12, bei dem die Übermittlung der ersten Betriebsparameter (PA1) an die zweite Netzkomponente (N2) und/oder die Übermittlung der zweiten Betriebsparameter an die erste Netzkomponente (N2) basierend auf dem LLDP-Protokoll erfolgt.

14. Verfahren nach einem der vorhergehenden Ansprüche, bei dem Schritt b) zumindest teilweise in einer zentralen Überwachungseinheit (MU) durchgeführt wird, wobei hierfür in der zentralen Überwachungseinheit (MU) Informationen von der ersten und zweiten Netzkomponente (N1, N2) empfangen werden, wobei die Informationen den oder die ersten und zweiten Betriebsparameter (PA1, PA2) und/oder daraus abgeleitete Größen umfassen.

15. Verfahren nach Anspruch 14, bei dem die Informationen in der zentralen Überwachungseinheit (MU) basierend auf dem SNMP-Protokoll empfangen werden.

16. Kommunikationsnetz mit einer Vielzahl von miteinander vernetzten Netzkomponenten (N1, N2, -., N5), welches derart ausgestaltet sind, dass im Betrieb des Kommunikationanetzes
- für ein oder mehrere Paare aus einer ersten und einer zweiten Netzkomponente (N1, N2) jeweils Betriebsparameter (PA1, PA2) betreffend die Kommunikation zwischen der ersten und zweiten Netzkomponente bereitgestellt werden, wobei die Betriebsparameter (PA1, PA2) einen oder mehrere lokale Betriebsparameter (PA1) der ersten Netzkomponente (N1) und einen oder mehrere lokale Betriebsparameter (PA2) der zweiten Netzkomponente (N2) umfassen, wobei der oder die ersten Betriebsparameter (PA1) zumindest teilweise aktuell im Betrieb des Kommunikationsnetzes von der ersten Netzkomponente (PA1) erfasst werden und/oder der oder die zweiten Betriebsparameter (PA2) zumindest teilweise aktuell im Betrieb des Kommunikationsnetzes von der zweiten Netzkomponente (N2) erfasst werden;
- basierend auf dem oder den ersten Betriebsparametern (PA1) und dem oder den zweiten Betriebsparametern (PA2) die Kommunikation zwischen der ersten und zweiten Netzkomponente überprüft wird,
wobei das Kommunikationsnetz derart ausgestaltet ist, dass in dem Kommunikationsnetz ein Verfahren nach einem der Ansprüche 1 bis 15 durchführbar ist.

## Claims

1. Method for monitoring the operation of a communication network having a multiplicity of network components (N1, N2, ..., N5) networked to one another, in which:
a) for one or more pairs comprising a first network component (N1) and a second network component (N2), operating parameters (PA1, PA2) relating to the communication between the first and second network components are respectively provided, the operating parameters (PA1, PA2) comprising one or more local first operating parameters (PA1) of the first network component (N1) and one or more local second operating parameters (PA2) of the second network component (N2), the first operating parameter(s) (PA1) at least partially being currently acquired from the first network component (N1) during operation of the communication network and/or the second operating parameter(s) (PA2) at least partially being currently acquired from the second network component (N2) during operation of the communication network;
b) the communication between the first network component (N1) and the second network component (N2) is checked on the basis of the first operating parameter(s) (PA1) and the second operating parameter(s) (PA2),
**characterized in that** the first and second network components (N1, N2) of a respective pair communicate with one another via an optical waveguide, the optical waveguide preferably directly connecting the first and second network components (N1, N2) to one another, and **in that** one or more first fibres of the optical waveguide are used for the communication from the first network component (N1) to the second network component (N2) and the second operating parameter(s) (PA2) relate(s) to the communication via the first fibre(s), one or more second fibres of the optical waveguide being used for the communication from the second network component (N2) to the first network component (N1) and the first operating parameter(s) (PA1) relating to the communication via the second fibre(s).

2. Method according to Claim 1, in which the operation of a communication network of an automation system is monitored and the network components (N1, N2) are components of the automation system, in particular one or more Ethernet switches and/or routers and/or sensors and/or actuators and/or control devices.

3. Method according to one of the preceding claims, in which the first operating parameter(s) (PA1) is/are the respective same local variables as the second operating parameter(s) (PA2), a check being carried out in step b) in order to determine whether the first operating parameter(s) (PA1) match(es) the second operating parameter(s) (PA2).

4. Method according to one of the preceding claims, in which the first and second network components (N1, N2) of a respective pair communicate with one another via an electrical line or via a wireless connection, the electrical line or the wireless connection preferably directly connecting the first and second network components (N1, N2) to one another.

5. Method according to one of the preceding claims, in which the first operating parameters (PA1) are partially operating parameters predefined for the first network node (N1) and/or the second operating parameters (PA2) are partially operating parameters predefined for the second network node (N2).

6. Method according to one of the preceding claims, in which a first diagnosis variable for a communication direction between the first and second network components (N1, N2) is determined from at least one first operating parameter (PA1) currently acquired during operation of the communication network and from at least one second operating parameter (PA2), and a second diagnosis variable for the other communication direction between the first and second network components (N1, N2) is determined from at least one second operating parameter (PA2) currently acquired during operation of the communication network and from at least one first operating parameter (PA1), the first and second diagnosis variables (D1, D2) being compared with one another in step b) and a message being output if the difference between the first and second diagnosis variables (D1, D2) exceeds a predetermined amount.

7. Method according to one of the preceding claims, in which the first operating parameter(s) (PA1) comprise(s) a reception strength of a signal emitted by the second network component (N2) in the first network component (N1) and/or a transmission strength of a signal emitted by the first network component (N1) and/or an error count value of data incorrectly received in the first network component (N1); and/or
the second operating parameter(s) (PA2) comprise(s) a reception strength of a signal emitted by the first network component (N1) in the second network component (N2) and/or a transmission strength of a signal emitted by the second network component (N2) and/or an error count value of data incorrectly received in the second network component (N2).

8. Method according to Claim 7, in which
- the first network component (N1) detects the reception strength of a signal emitted by the second network component (N2) in itself as a first operating parameter (PA1) and the transmission strength of a signal emitted by the first network component (N1) is also provided as a further first operating parameter;
- the second network component (N2) detects the reception strength of a signal emitted by the first network component (N1) in itself as a second operating parameter (PA2) and the transmission strength of a signal emitted by the second network component (N2) is also provided as a further second operating parameter (PA2);
- a first damping factor (D1) for the signal transmitted from the first network component (N1) to the second network component (N2) is determined from the reception strength of the signal emitted by the first network component (N1) and the transmission strength of the signal emitted by the first network component (N1);
- a second damping factor (D2) for the signal transmitted from the second network component (N2) to the first network component (N1) is determined from the reception strength of the signal emitted by the second network component and the transmission strength of the signal emitted by the second network component (N2);
- the first and second damping factors (D1, D2) are compared with one another and a message is output if the difference between the first and second damping factors (D1, D2) exceeds a predetermined threshold.

9. Method according to Claim 7 or 8, in which the first network component (N1) detects the reception strength of a signal emitted by the second network component (N2) in itself as a first operating parameter (PA1) and the transmission strength of a signal emitted by the second network component is also provided as a second operating parameter (PA2), a damping factor (D1, D2) for the signal transmitted from the second network component (N2) to the first network component (N1) being determined from these operating parameters and a message being output if the difference between the determined damping factor (D1, D2) and a predetermined damping factor exceeds a threshold value.

10. Method according to one of Claims 7 to 9, in which the second network component (N2) detects the reception strength of a signal emitted by the first network component (N1) in itself as a second operating parameter (PA2) and the transmission strength of a signal emitted by the first network component (N1) is also provided as a first operating parameter (PA1), a damping factor (D1, D2) for the signal transmitted from the first network component (N1) to the second network component (N2) being determined from these operating parameters and a message being output if the difference between the determined damping factor (D1, D2) and a predetermined damping factor exceeds a threshold value.

11. Method according to one of Claims 7 to 10, in which the error count value of data incorrectly received in the first network component (N1) is provided as a first operating parameter (PA1) and the error count value of data incorrectly received in the second network component (N2) is provided as a second operating parameter (PA2), the two error count values being compared with one another and a message being output if the difference between the error count values exceeds a predetermined threshold.

12. Method according to one of the preceding claims, in which step b) is at least partially carried out in a decentralized manner in the first network component (N1) and/or second network component (N2) of a respective pair, the first network component (N1) transmitting its first operating parameters (PA1) to the second network component (N2) and/or the second network component (N2) transmitting its second operating parameters (PA2) to the first network component (N1) for this purpose.

13. Method according to Claim 12, in which the first operating parameters (PA1) are transmitted to the second network component (N2) and/or the second operating parameters are transmitted to the first network component (N1) on the basis of the LLDP protocol.

14. Method according to one of the preceding claims, in which step b) is at least partially carried out in a central monitoring unit (MU), information being received from the first and second network components (N1, N2) in the central monitoring unit (MU) for this purpose, the information comprising the first and second operating parameter(s) (PA1, PA2) and/or variables derived therefrom.

15. Method according to Claim 14, in which the information is received in the central monitoring unit (MU) on the basis of the SNMP protocol.

16. Communication network having a multiplicity of network components (N1, N2, ..., N5) which are networked to one another and are configured in such a manner that, during operation of the communication network,
- for one or more pairs comprising a first network component (N1) and a second network component (N2), operating parameters (PA1, PA2) relating to the communication between the first and second network components are respectively provided, the operating parameters (PA1, PA2) comprising one or more local operating parameters (PA1) of the first network component (N1) and one or more local operating parameters (PA2) of the second network component (N2), the first operating parameter(s) (PA1) at least partially being currently acquired from the first network component (N1) during operation of the communication network and/or the second operating parameter(s) (PA2) at least partially being currently acquired from the second network component (N2) during operation of the communication network;
- the communication between the first and second network components is checked on the basis of the first operating parameter(s) (PA1) and the second operating parameter(s) (PA2),
the communication network being configured in such a manner that a method according to one of Claims 1 to 15 can be carried out in the communication network.

## Revendications

1. Procédé de contrôle du fonctionnement d'un réseau de communication ayant une pluralité de composants (N1, N2, ..., N5) de réseau mis en réseau entre eux, dans lequel :
a ) pour une paire ou pour plusieurs paires composées d'un premier et d'un deuxième composants ( N1, N2 ) de réseau, on met à disposition respectivement des paramètres ( PA1, PA2 ) de fonctionnement concernant la communication entre le premier et le deuxième composants de réseau, les paramètres ( PA1, PA2 ) de fonctionnement comprenant un ou plusieurs premiers paramètres ( PA1 ) locaux de fonctionnement du premier composant ( N1 ) de réseau et un ou plusieurs deuxièmes paramètres ( PA2 ) locaux de fonctionnement du deuxième composant ( N2 ) de réseau, le premier ou les premiers paramètres ( PA1 ) de fonctionnement étant détecté(s), au moins en partie présentement, au fonctionnement du réseau de communication par le premier composant ( PA1 ) de réseau, et/ou le ou les deuxièmes paramètres ( PA2 ) de fonctionnement étant détectés, au moins en partie présentement, au fonctionnement du réseau de communication par le deuxième composant ( N2 ) de réseau,
b ) sur la base du ou des premiers paramètres ( PA1 ) de fonctionnement et du ou des deuxièmes paramètres ( PA2 ) de fonctionnement, on contrôle la communication entre le premier et le deuxième composants ( N1, N2 ) de réseau, **caractérisé en ce que** le premier et le deuxième composants ( N1, N2 ) de réseau d'une paire respective communiquent entre eux par un guide d'onde optique, le guide d'onde optique reliant, de préférence directement entre eux, le premier et le deuxième composants ( N1, N2 ) de réseau, et **en ce qu'**une ou plusieurs premières fibres du guide d'onde optique servent à la communication du premier au deuxième composant ( N1, N2 ) de réseau, et le ou les deuxièmes paramètres ( PA2 ) de fonctionnement concernent la communication par la première ou les premières fibres, et dans lequel une ou plusieurs deuxièmes fibres du guide d'onde optique servent à la communication du deuxième au premier composant ( N1, N2 ) de réseau, et le ou les premiers paramètres ( PA1 ) de fonctionnement concernent la communication par la deuxième ou les deuxièmes fibres.

2. Procédé suivant la revendication 1, dans lequel on contrôle le fonctionnement d'un réseau de communication d'une installation d'automatisation et les composants ( N1, N2 ) du réseau représentent des composants de l'installation d'automatisation, notamment un ou plusieurs commutateurs éthernet et/ou routeurs et/ou capteurs et/ou actionneurs et/ou appareils de commande.

3. Procédé suivant l'une des revendications précédentes, dans lequel le ou les premiers paramètres ( PA1 ) de fonctionnement représentent les mêmes grandeurs locales respectives que le ou les deuxièmes paramètres ( PA2 ) de fonctionnement, dans lequel dans le stade b ) on contrôle si le ou les premiers paramètres ( PA1 ) de fonctionnement coïncident avec le ou les deuxièmes paramètres ( PA2 ) de fonctionnement.

4. Procédé suivant l'une des revendications précédentes, dans lequel les premier et deuxième composants ( N1, N2 ) de réseau d'une paire respective communiquent entre eux par une ligne électrique ou par une liaison sans fil, la ligne électrique ou la liaison sans fil reliant entre eux, de préférence directement, les premier et deuxième composants ( N1, N2 ) de réseau.

5. Procédé suivant l'une des revendications précédentes, dans lequel les premiers paramètres ( PA1 ) de fonctionnement sont des paramètres de fonctionnement donnés à l'avance en partie pour le premier noeud ( N1 ) de réseau, et/ou les deuxièmes paramètres ( PA2 ) de fonctionnement sont des paramètres de fonctionnement donnés à l'avance en partie pour le deuxième noeud ( N2 ) de réseau.

6. Procédé suivant l'une des revendications précédentes, dans lequel, à partir d'au moins un premier paramètre ( PA1 ) de fonctionnement détecté présentement au fonctionnement du réseau de communication et d'au moins un deuxième paramètre ( PA2 ) de fonctionnement, on détermine une première grandeur de diagnostic pour un sens de communication entre le premier et le deuxième composants ( N1, N2 ) de réseau, et à partir d'au moins un deuxième paramètre ( PA2 ) de fonctionnement détecté présentement au fonctionnement du réseau de communication et d'au moins un premier paramètre ( PA1 ) de fonctionnement, on détermine une deuxième grandeur de diagnostic pour l'autre sens de communication entre le premier et le deuxième composants ( N1, N2 ) de réseau, dans lequel dans le stade b ) la première et la deuxième grandeurs ( D1, D2 ) de diagnostic sont comparées entre elles et un avertissement est émis si la différence entre la première et la deuxième grandeurs ( D1, D2 ) de diagnostic dépasse une valeur déterminée à l'avance.

7. Procédé suivant l'une des revendications précédentes, dans lequel le ou les premiers paramètres ( PA1 ) de fonctionnement comprennent une intensité de réception d'un signal, émis par le deuxième composant ( N2 ) de réseau, dans le premier composant ( N1 ) de réseau, et/ou une intensité de réception d'un signal émis par le premier composant ( N1 ) de réseau et/ou une valeur de compte d'erreur de données qui ne sont pas reçues correctement dans le premier composant ( N1 ) de réseau et/ou
le ou les deuxièmes paramètres ( PA2 ) de fonctionnement comprennent une intensité de réception d'un signal, émis par le premier composant ( N1 ) de réseau, dans le deuxième composant ( N2 ) de réseau et/ou une intensité d'émission d'un signal émis par le deuxième composant ( N2 ) de réseau et/ou une valeur de compte d'erreur de données qui ne sont pas reçues correctement dans le deuxième composant ( N2 ) de réseau.

8. Procédé suivant la revendication 7, dans lequel
- le premier composant ( N1 ) de réseau détecte pour soi, comme premier paramètre ( PA1 ) de fonctionnement, l'intensité de réception d'un signal émis par le deuxième composant ( N2 ) de réseau et met en outre à disposition, comme autre premier paramètre de fonctionnement, l'intensité d'émission d'un signal émis par le premier composant ( N1 ) de réseau ;
- le deuxième composant ( N2 ) de réseau détecte pour soi, comme deuxième paramètre ( PA2 ) de fonctionnement, l'intensité de réception d'un signal émis par le premier composant ( N1 ) de réseau et met en outre à disposition, comme autre deuxième paramètre ( PA2 ) de fonctionnement, l'intensité d'émission d'un signal émis par le deuxième composant ( N2 ) de réseau ;
- à partir de l'intensité de réception du signal émis par le premier composant ( N1 ) de réseau et de l'intensité d'émission du signal émis par le premier composant ( N1 ) de réseau, on détermine une première valeur ( D1 ) d'atténuation du signal transmis du premier au deuxième composant ( N1, N2 ) de réseau ;
- à partir de l'intensité de réception du signal émis par le deuxième composant ( N2 ) de réseau et de l'intensité d'émission du signal émis par le deuxième composant de réseau, on détermine une deuxième valeur ( D1 ) d'atténuation du signal transmis du deuxième au premier composant ( N1, N2 ) de réseau ;
- on compare entre eux la première et la deuxième valeurs ( D1, D2 ) d'atténuation et on émet un avertissement si la différence entre la première et la deuxième valeurs ( D1, D2 ) d'atténuation dépasse un seuil défini à l'avance.

9. Procédé suivant la revendication 7 ou 8, dans lequel le premier composant ( N1 ) de réseau détermine pour soi, comme premier paramètre ( PA1 ) de fonctionnement, l'intensité de réception d'un signal émis par le deuxième composant ( N2 ) de réseau, et met en outre à disposition, comme deuxième paramètre ( PA2 ) de fonctionnement, l'intensité d'émission d'un signal émis par le deuxième composant de réseau, dans lequel, à partir de ces paramètres de fonctionnement, on détermine une valeur ( D1, D2 ) d'atténuation du signal transmis du deuxième au premier composant ( N1, N2 ) de réseau, et on émet un avertissement si la différence entre la valeur ( D1, D2 ) d'atténuation déterminée et une valeur d'atténuation définie à l'avance dépasse une valeur de seuil.

10. Procédé suivant l'une des revendications 7 à 9, dans lequel le deuxième composant ( N2 ) de réseau détecte pour soi, comme deuxième paramètre ( PA2 ) de fonctionnement, l'intensité de réception d'un signal émis par le premier composant ( N1 ) de réseau, et met en outre à disposition, comme premier paramètre ( PA1 ) de fonctionnement, l'intensité d'émission d'un signal émis par le premier composant ( N1 ) de réseau, dans lequel, à partir de ces paramètres de fonctionnement, on détermine une valeur ( D1, D2 ) d'atténuation du signal transmis du premier au deuxième composant ( N1, N2 ) de réseau, et on émet un avertissement si la différence entre la valeur ( D1, D2 ) d'atténuation déterminée et une valeur d'atténuation définie à l'avance dépasse une valeur de seuil.

11. Procédé suivant l'une des revendications 7 à 10, dans lequel on met à disposition, comme premier paramètre ( PA1 ) de fonctionnement, la valeur de compte d'erreur de données qui ne sont pas reçues correctement dans le premier composant ( N1 ) de réseau, et, comme deuxième paramètre ( PA2 ) de fonctionnement, la valeur de compte d'erreur de données qui ne sont pas reçues correctement dans le deuxième composant ( N2 ) de réseau, on compare les deux valeurs de compte d'erreur entre elles et on émet un avertissement si la différence entre les valeurs de compte d'erreur dépasse un seuil défini à l'avance.

12. Procédé suivant l'une des revendications précédentes, dans lequel on effectue le stade b ) au moins en partie de manière décentralisée dans le premier et/ou dans le deuxième composant ( N1, N2 ) de réseau d'une paire respective, dans lequel, pour cela, le premier composant ( N1 ) de réseau transmet son premier paramètre ( PA1 ) de fonctionnement au deuxième composant ( N2 ) de réseau et/ou le deuxième composant ( N2 ) de réseau transmet son deuxième paramètre ( PA2 ) de fonctionnement au premier composant ( N1 ) de réseau.

13. Procédé suivant la revendication 12, dans lequel la transmission du premier paramètre ( PA1 ) de fonctionnement au deuxième composant ( N2 ) de réseau et/ou la transmission du deuxième paramètre ( N2 ) de fonctionnement au premier composant de réseau reposent sur le protocole LLDP.

14. Procédé suivant l'une des revendications précédentes, dans lequel on effectue le stade b ) au moins en partie dans une unité ( MU ) de contrôle centrale, dans lequel, pour cela, on reçoit dans l'unité ( MU ) de contrôle centrale, des informations du premier et du deuxième composants ( N1, N2 ) de réseau, les informations comprenant le ou les premiers et deuxièmes paramètres ( PA1, PA2 ) de fonctionnement et/ou des grandeurs qui s'en déduisent.

15. Procédé suivant la revendication 14, dans lequel on reçoit les informations dans l'unité ( MU ) de contrôle centrale, sur la base du protocole SNMP.

16. Réseau de communication ayant une pluralité de composants ( N1, N2, ..., N5 ) de réseau mis en réseau entre eux, qui sont tels qu'en fonctionnement du réseau de communication
- pour une ou plusieurs paires composées d'un premier et d'un deuxième composants ( N1, N2 ) de réseau, respectivement des paramètres ( PA1, PA2 ) de fonctionnement concernant la communication entre le premier et le deuxième composants de réseau sont mis à disposition, les paramètres ( PA1, PA2 ) de fonctionnement comprenant un ou plusieurs paramètres ( PA1 ) de fonctionnement local du premier composant ( N1 ) de réseau, et un ou plusieurs paramètres ( PA2 ) de fonctionnement local du deuxième composant ( N2 ) de réseau, le ou les premiers paramètres ( PA1 ) de fonctionnement étant détectés au moins en partie présentement au fonctionnement du réseau de communication par le premier composant ( PA1 ) de réseau, et/ou le ou les deuxièmes paramètres ( PA2 ) de fonctionnement étant détectés au moins en partie présentement au fonctionnement du réseau de communication par le deuxième composant ( N2 ) de réseau ;
- sur la base du ou des premiers paramètres ( PA1 ) de fonctionnement et du ou des deuxièmes paramètres ( PA2 ) de fonctionnement, la communication entre le premier et le deuxième composants de réseau est contrôlée,
dans lequel le réseau de communication est tel, qu'il peut être effectué dans le réseau de communication un procédé suivant l'une des revendications 1 à 15.
